# DEMANDE DE BREVET EUROPEEN

(11) **EP 3 051 503 A1**
(43) Date de publication de la demande: **03.08.2016**
(21) Numéro de dépôt: 16153077.9
(22) Date de dépôt: 28.01.2016
(51) Int. Cl.: G07C 9/00, B64D 11/00

(54) **PROCÉDÉ DE COMPTAGE DE PERSONNES**

(30) Priorité: 02.02.2015 FR 1550788
(71) Demandeur: Zodiac Aerotechnics, 78373 Plaisir Cedex (FR)
(72) Inventeur: BOIGAS, Patrick, 78760 Jouars Ponchartrain (FR)
(74) Mandataire: Cabinet Plasseraud

(57) **Abrégé**

Un procédé de comptage de personnes (10) qui franchissent un passage d'accès (103) est basé sur l'acquisition d'un flux vidéo par une caméra (1). Un tel procédé est particulièrement adapté pour dénombrer les passagers qui pénètrent dans la cabine (102) d'un avion (100) lors d'une phase d'embarquement ou de débarquement.

## Description

La présente invention concerne un procédé et un système de comptage de personnes.

De nombreuses situations nécessitent de compter les personnes qui accèdent à un lieu, par exemple pour des études statistiques de fréquentation ou des conditions de sécurité.

Usuellement, un tel comptage est réalisé par un opérateur dédié, qui peut être muni d'un compteur à actionnement mécanique pour réduire un risque d'erreur de comptage.

La présente invention a pour but de réaliser un tel comptage de personnes automatiquement, sans mobiliser un opérateur au moment du passage des personnes.

Un but supplémentaire est de permettre une visualisation ultérieure des personnes décomptées, par exemple à but de vérification, ou à des fins d'enquête, de contrôle ou de recherche d'individus.

Pour cela, un premier aspect de l'invention propose un procédé de comptage de personnes qui franchissent un passage d'accès, comprenant les étapes suivantes :
/1/ disposer au moins une caméra de sorte qu'un champ optique de la caméra contienne le passage d'accès ;
/2/ saisir un flux vidéo d'images à l'aide de la caméra, continûment entre un instant de début de comptage et un instant de fin de comptage ;
/3/ à partir d'une comparaison entre plusieurs images successives du flux vidéo, détecter au moins une apparition ou une disparition d'un visage ou d'une silhouette humaine à l'intérieur du champ optique ; et
/4/ incrémenter ou décrémenter un décompte des personnes si une apparition ou une disparition de visage ou de silhouette humaine a été détectée à l'étape /3/.

Un tel procédé est simple et peu onéreux à mettre en oeuvre. En outre, il ne mobilise pas d'opérateur pendant la durée du comptage.

Le passage d'accès peut être notamment un passage d'accès à un moyen de transport, notamment un passage d'accès à une cabine d'avion. Le procédé est alors destiné à être mis en oeuvre lors d'une phase d'embarquement ou de débarquement de passagers.

Dans certaines mises en oeuvre de l'invention, l'apparition ou la disparition du visage ou de la silhouette humaine peut être détectée à l'étape /3/ à partir d'une comparaison entre des contenus respectifs des images successives, qui sont situés au niveau d'au moins un bord prédéterminé du champ optique. Dans ce cas, l'étape /3/ peut comprendre une distinction entre une détection d'apparition et une détection de disparition, pour le visage ou la silhouette humaine à l'intérieur du champ optique, cette distinction étant basée sur une détermination d'un sens de déplacement du visage ou de la silhouette humaine dans les images successives au niveau du bord prédéterminé du champ optique. L'étape /4/ peut alors être une incrémentation ou une décrémentation du décompte des personnes, selon que la distinction a déterminé une détection d'apparition ou bien une détection de disparition pour le visage ou la silhouette humaine à l'intérieur du champ optique.

Dans des perfectionnements de l'invention, certaines au moins des images du flux vidéo peuvent en outre être traitées pour lier un masque ou un brouillage à un emplacement dans ces images de chaque visage ou silhouette humaine. Ainsi, le visage ou la silhouette humaine peut apparaître masquée ou brouillée lors d'une visualisation ultérieure des images enregistrées, sauf si une autorisation de visualisation sans brouillage ni masque a été contrôlée positivement avant la visualisation. De cette façon, des obligations de respect de la vie privée et du droit individuel à l'image peuvent être respectées. Simultanément, l'enregistrement du flux vidéo contenant les visages des personnes qui ont franchi le passage d'accès, reste disponible pour des agents autorisés, notamment dans un but de vérification, ou à des fins d'enquête, de contrôle ou de recherche d'individus.

Dans certaines mises en oeuvre de l'invention, plusieurs passages d'accès distincts peuvent être respectivement équipés de caméras, et les étapes /1/ à /3/ sont exécutées séparément pour chacun des passages d'accès. Mais l'étape /4/ peut être exécutée pour un décompte unique de personnes, qui est commun aux passages accès distincts. De telles mises en oeuvre sont adaptées notamment lorsque plusieurs passages d'accès desservent en parallèle un même site, tel qu'un bâtiment ouvert au public ou une cabine d'avion. Le décompte unique et commun constitue alors un bilan des personnes qui sont à l'intérieur de ce site.

Un second aspect de l'invention propose un système vidéo de comptage de personnes, qui comprend :
- une caméra, qui est adaptée pour saisir un flux vidéo d'images, continûment entre un instant de début de comptage et un instant de fin de comptage ;
- une unité de recherche de visage ou de silhouette humaine, qui est adaptée pour rechercher au moins un visage ou une silhouette humaine à l'intérieur de chaque image ;
- une unité de détection d'apparition ou de disparition, qui est adaptée pour détecter une évolution d'apparition ou de disparition pour chaque visage ou silhouette humaine qui a été trouvée par l'unité de recherche, à partir d'une comparaison entre des contenus respectifs de plusieurs images successives ; et
- un compteur, qui est commandé pour incrémenter ou décrémenter un décompte de personnes en fonction d'un signal de détection d'apparition ou de disparition, produit par l'unité de détection.

Un tel système est adapté pour mettre en oeuvre un procédé conforme au premier aspect de l'invention.

Afin de mettre en oeuvre les perfectionnements de l'invention qui ont été mentionnés pour le premier aspect, en particulier, le système vidéo de comptage peut comprendre en outre :
- un enregistreur vidéo, qui est adapté pour enregistrer certaines au moins des images saisies par la caméra ;
- une unité de brouillage ou masquage, qui est adaptée pour lier un brouillage ou un masque à chaque emplacement dans les images enregistrées où se trouve un visage ou une silhouette humaine ; et
- une unité de contrôle d'autorisation, qui est adaptée pour transmettre à un écran de visualisation les images traitées par l'unité de brouillage ou de masquage, de sorte que chaque visage ou silhouette humaine apparaisse brouillée ou masquée lors d'une visualisation de ces images sur l'écran de visualisation, sauf si une autorisation de visualisation sans brouillage ni masque a été contrôlée positivement par cette unité de contrôle d'autorisation.

Avantageusement, l'un au moins des éléments du système vidéo de comptage de personnes parmi la caméra, l'unité de recherche de visage ou de silhouette humaine, l'unité de détection d'apparition ou de disparition, et le compteur peut être partagé avec un système de surveillance vidéo de cabine qui est adapté pour être installé à l'intérieur d'un avion.

Possiblement, le système vidéo de comptage de personnes de l'invention peut comprendre en outre une borne d'alimentation en énergie électrique, celle-ci étant adaptée pour être raccordée à une source d'énergie qui est externe au système lui-même.

Possiblement aussi, le système vidéo de comptage de personnes de l'invention peut comprendre en outre une sortie de transfert de données, cette sortie de transfert de données étant adaptée pour être raccordée à une unité de visualisation qui est externe au système lui-même.

D'autres particularités et avantages de la présente invention apparaîtront dans la description ci-après d'un exemple de mise en oeuvre non limitatif, en référence aux dessins annexés, dans lesquels :
- la figure 1 est un plan intérieur d'avion, en élévation ;
- la figure 2 reproduit plusieurs images successives d'un flux vidéo, montrant l'entrée d'un passager dans l'avion de la figure 1 ; et
- la figure 3 montre une chaîne de modules d'acquisition et de traitement d'images, qui est adaptée pour mettre en oeuvre l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

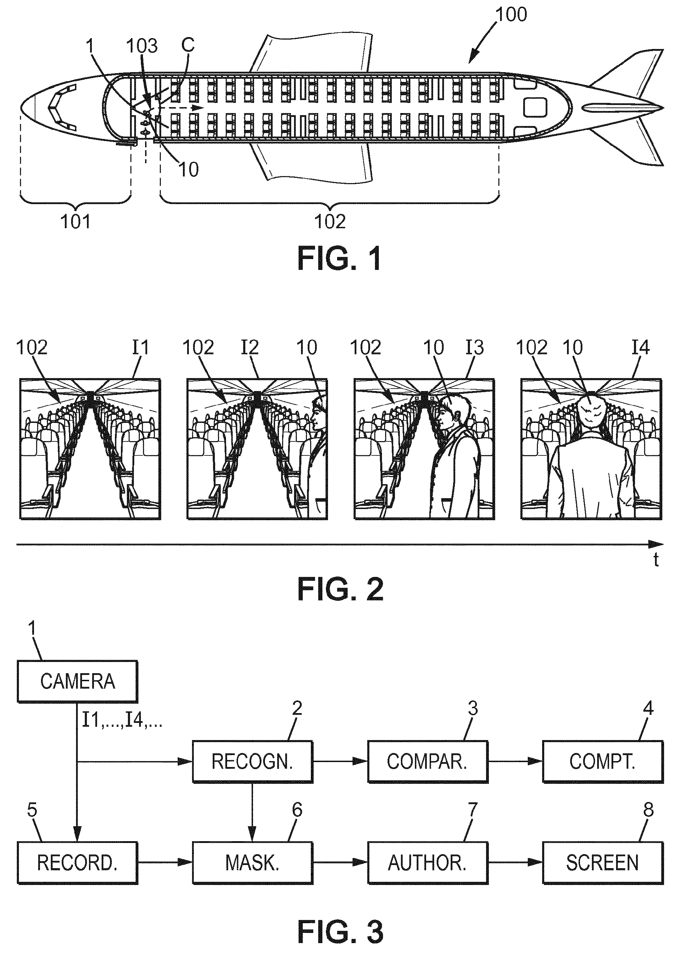

A titre d'exemple, la figure 1 montre le passage d'accès à la cabine d'un avion de transport de voyageurs. Les références 100, 101, 102 et 103 désignent respectivement l'avion dans son ensemble, son cockpit, la cabine dans laquelle sont situées les rangées de sièges destinés aux voyageurs, et le passage d'accès des voyageurs depuis l'extérieur de l'avion jusqu'à l'intérieur de la cabine. Le passage d'accès 103, qui est représenté par une flèche en trait interrompu, peut traverser un vestibule qui est situé entre le cockpit 101 et la cabine 102. La figure 1 montre un passager référencé 10, qui avance à l'intérieur du vestibule pour pénétrer dans la cabine 102. Le passager 10 suit donc le passage d'accès 103.

Selon l'invention, une caméra 1 est fixée à l'intérieur de l'avion 100, de sorte que son champ optique C contienne une section transversale du passage d'accès 103. Ainsi, le passager 10 apparaît dans les images d'un flux vidéo continu qui est saisi par la caméra 1. Par exemple, la caméra 1 peut être située au dessus de la porte intermédiaire entre le cockpit 101 et le vestibule de l'avion 100.

La caméra 1 peut être adaptée pour saisir des images dans le domaine spectral visible, ou dans le domaine spectral proche infrarouge, ou encore dans le domaine spectral infrarouge thermique. Eventuellement, elle peut être adaptée pour saisir simultanément des images spectrales dans plusieurs de ces domaines spectraux, et des images de combinaison sont ensuite construites, qui résultent de combinaisons de plusieurs images spectrales qui ont été saisies simultanément par la caméra 1. L'utilisation de telles images de combinaison ou multispectrales permet notamment de réduire une probabilité de fausse détection de personnes tout en conservant une information de couleurs naturelles.

La figure 2 reproduit quatre images successives 11, 12, 13 et 14 telles que saisies par la caméra 1. Dans cette figure, l'axe horizontal qui est noté t représente le temps. L'image I1 est saisie avant que le passager 10 pénètre dans le champ optique C, l'image 12 est saisie au moment où il pénètre dans le champ optique C, l'image 13 lorsque que le passager 10 s'est avancé dans le champ optique C, puis l'image 14 lorsqu'il pénètre dans la cabine 102.

L'apparition du passager 10 entre les images I1 et I2 peut être détectée en comparant les contenus respectifs des deux images, notamment dans une zone qui est limitée à proximité du bord droit de ces images. Une détection de mouvement peut être utilisée, mais la combinaison d'une détection de mouvement avec une reconnaissance de formes permet de réduire le risque de fausse détection de personne humaine. Pour cela, une reconnaissance de visage ou de silhouette humaine qui procède par recherche de points caractéristiques, peut avantageusement être mise en oeuvre sur les éléments mobiles qui sont contenus dans les images, afin de détecter l'apparition du passager 10 dans le passage d'accès 103. Des logiciels qui sont capables de réaliser de telles reconnaissances de visages par points caractéristiques, sont connus de l'Homme du métier. Alors, un compteur peut être incrémenté d'une unité, pour dénombrer les passagers qui ont franchi le passage d'accès 103 en direction de la cabine 102.

Il est possible qu'un passager ressorte de la cabine 102 jusqu'à l'extérieur de l'avion 100, pendant la durée de comptage. Dans ce cas, un tel passager apparaît avec un sens de déplacement qui est inversé à l'intérieur du champ optique C de la caméra 1. Une détection du sens de déplacement du passager 10 dans des images successives du flux vidéo, permet de distinguer entre un déplacement d'entrée dans l'avion 100 ou de sortie vers l'extérieur. D'une façon qui peut être mise en oeuvre simplement, le sens de déplacement du passager 10 peut être déterminé en comparant les positions d'éléments mobiles qui sont contenus dans les images, notamment à proximité du bord droit de ces images. Le compteur des passagers peut alors être incrémenté d'une unité dans le cas d'un déplacement dans le sens de l'entrée dans l'avion 100, et décrémenté d'une unité dans le cas d'un déplacement dans le sens de la sortie vers l'extérieur de l'avion 100.

Le flux vidéo complet qui a été saisi par la caméra 1 pendant l'embarquement peut être visionné ultérieurement par un agent, par exemple dans un but de vérification. Il est alors possible que l'apparition distincte du visage de chaque passager 10 ne soit pas souhaitée, notamment à cause de la législation de certains pays. Dans ce cas, le flux vidéo peut être visionné sur un écran avec un brouillage ou un masque à l'emplacement du visage de chaque passager dans les images. L'emplacement du visage dans chaque image peut être déterminé par une unité de recherche des points caractéristiques d'un visage humain, et le brouillage ou masque est introduit localement à cet emplacement dans l'image lors d'une étape préalable à l'affichage sur l'écran. Une telle opération de brouillage ou masquage des visages peut être mise en oeuvre par défaut pour toute visualisation du flux vidéo. Eventuellement, elle peut être inhibée lorsqu'une autorisation de visualisation avec les visages qui apparaissent distinctement, est produite par l'agent de visualisation.

La figure 3 montre une combinaison de modules d'acquisition et de traitement d'images, qui est adaptée pour mettre en oeuvre l'invention. Les références numériques qui sont indiquées dans cette figure ont les significations suivantes :
1 la caméra déjà introduite
2 unité de recherche de visage ou de silhouette humaine, notée RECOGN., pour traiter successivement chaque image saisie par la caméra 1
3 unité de comparaison de contenus d'images, notée COMPAR., pour détecter une nouvelle apparition ou disparition de visage ou de silhouette humaine dans le champ optique C de la caméra 1
4 compteur, noté COMPT. et activé en incrémentation ou en décrémentation en fonction d'un signal de détection qui est délivré par l'unité 3 de comparaison des contenus d'images
5 unité d'enregistrement, notée RECORD., pour enregistrer les images saisies par la caméra 1
6 unité de brouillage ou de masquage, notée MASK., pour introduire des brouillages ou des masques aux emplacements des visages des passagers dans les images enregistrées, tels que ces emplacements ont été identifiés par l'unité 2 de recherche de visage
7 unité de contrôle d'autorisation, notée AUTHOR., pour transmettre les images avec les brouillages ou les masques sur les visages des passagers en l'absence d'une autorisation visualisation qui soit valide, ou sans brouillage ni masque lorsqu'une autorisation valide est introduite dans l'unité de contrôle 7
8 écran de visualisation des images, noté SCREEN

De façon générale, mais particulièrement lorsque l'invention est utilisée à bord d'un avion, certains éléments du système vidéo de comptage de personnes peuvent être partagés avec un système de surveillance vidéo de cabine (désigné par l'acronyme CVMS pour «cabin video monitoring system» en anglais) tel que déjà mis en oeuvre dans certains avions, et décrit par exemple dans le brevet US 8,127,333.

Par ailleurs, une borne d'alimentation en énergie électrique, pour fournir la puissance nécessaire au fonctionnement de certains au moins des éléments du système vidéo de comptage de personnes, peut être prévue en vue d'un raccordement à une source d'énergie qui est externe à l'avion. Ainsi, le système vidéo de comptage de personnes peut être utilisé lorsque l'avion est au parking lors des phases d'embarquement ou de débarquement, sans provoquer de consommation énergétique excessive par rapport à la capacité du système autonome de production électrique de l'avion qui est alors activé.

Enfin, le système vidéo de comptage de personnes peut être muni d'une sortie de transfert de données, qui est destinée à être raccordée à une unité de visualisation externe à l'avion. De cette façon, les images qui sont saisies par la caméra sont aussi accessibles pour un agent autorisé, à partir d'un poste qui est situé à l'extérieur de l'avion. Une telle possibilité de visualisation depuis l'extérieur de l'avion peut être utile à des fins de sécurité ou de gestion de l'embarquement ou du débarquement des passagers.

Il est entendu que l'invention peut être reproduite en en modifiant certains aspects secondaires par rapport à la description détaillée qui vient d'être donnée. En particulier, la caméra 1 peut être orientée de différentes façons par rapport au passage d'accès 103. Notamment, elle peut être orientée de sorte que les visages des passagers apparaissent de face dans les images à un moment au moins de leur présence dans le champ optique C de la caméra 1. La caméra 1 peut être orientée pour que les visages apparaissent ainsi de face lors de l'entrée des passagers dans la cabine 102 de l'avion 100, ou alternativement lors de leur sortie. Eventuellement, plusieurs caméras peuvent être utilisées simultanément, en étant orientées différemment les unes des autres pour couvrir ensemble toute une section du passage d'accès 103. Enfin, l'invention n'est pas limitée à la mise en oeuvre d'algorithme de détection d'apparition ou de disparition de contenus d'images, qui sont basés sur l'analyse des images à proximité d'un ou de plusieurs bords de celle-ci. De même, l'invention peut être mise en oeuvre sans utiliser nécessairement d'algorithme de reconnaissance de visage ou de silhouette humaine. En effet, seulement la détection et l'analyse du sens des mouvements qui surviennent dans le champ optique C de la caméra 1, à partir des images qui sont acquises successivement, peuvent être suffisantes pour compter les personnes conformément à l'invention.

Par ailleurs, l'invention peut aussi être appliquée à un avion dont la cabine est accessible par plusieurs entrées, par chacune desquelles les passagers peuvent pénétrer dans la cabine ou en ressortir. Tel est le cas, par exemple, pour un avion dans lequel les passagers peuvent entrer non seulement par une porte qui est située près du cockpit, mais aussi par une porte de queue d'avion et/ou par une porte intermédiaire dans la longueur de la cabine. Elle peut aussi être appliquée identiquement à un avion à deux niveaux de cabine, ou à deux ponts, dans lequel chaque pont est desservi par des accès séparés. Dans de tels cas de cabines à accès multiples, une caméra est disposée à chacun des accès, et le compteur des passagers, commun à tous les accès, est incrémenté ou décrémenté en fonction des visages ou des silhouettes humaines qui sont détectées dans les flux vidéo de toutes les caméras, et des évolutions d'apparition ou de disparition qui sont déterminées pour chacun de ces visages ou silhouettes humaines.

Enfin l'invention peut aussi être utilisée avantageusement pour le (les) accès à la soute d'un avion, notamment pour garantir qu'aucune personne ne reste enfermée dans celle-ci au moment de sa fermeture.

## Revendications

1. Procédé de comptage de personnes (10) qui franchissent un passage d'accès (103), comprenant les étapes suivantes :
/1/ disposer au moins une caméra (1) de sorte qu'un champ optique (C) de la caméra contienne le passage d'accès (103) ;
/2/ saisir un flux vidéo d'images (I1,..., I4) à l'aide de ladite caméra (1), continûment entre un instant de début de comptage et un instant de fin de comptage ;
/3/à partir d'une comparaison entre plusieurs images (I1,..., I4) successives du flux vidéo, détecter au moins une apparition ou une disparition d'un visage ou d'une silhouette humaine à l'intérieur du champ optique (C) ; et
/4/ incrémenter ou décrémenter un décompte de personnes (10) si une apparition ou une disparition de visage ou de silhouette humaine a été détectée à l'étape /3/.

2. Procédé selon la revendication 1, suivant lequel le passage d'accès (103) est un passage d'accès à un moyen de transport, notamment un passage d'accès à une cabine d'avion (102), et le procédé est mis en oeuvre lors d'une phase d'embarquement ou de débarquement de passagers.

3. Procédé selon la revendication 1 ou 2, suivant lequel l'apparition ou la disparition du visage ou de la silhouette humaine est détectée à l'étape /3/ à partir d'une comparaison entre des contenus respectifs des images (I1,..., I4) successives, qui sont situés au niveau d'au moins un bord prédéterminé du champ optique (C).

4. Procédé selon la revendication 3, suivant lequel l'étape /3/ comprend une distinction entre une détection d'apparition et une détection de disparition, pour le visage ou la silhouette humaine à l'intérieur du champ optique (C), ladite distinction étant basée sur une détermination d'un sens de déplacement dudit visage ou de ladite silhouette humaine dans les images (I1,..., I4) successives au niveau dudit bord prédéterminé du champ optique ;
et
l'étape /4/ est une incrémentation ou une décrémentation du décompte des personnes (10), selon que la distinction a déterminé une détection d'apparition ou bien une détection de disparition pour ledit visage ou ladite silhouette humaine à l'intérieur du champ optique (C).

5. Procédé selon l'une quelconque des revendications précédentes, suivant lequel certaines au moins des images (I1,..., I4) du flux vidéo sont en outre traitées pour lier un masque ou un brouillage à un emplacement dans lesdites images de chaque visage ou silhouette humaine, de sorte que ledit visage ou ladite silhouette humaine apparaisse masquée ou brouillée lors d'une visualisation ultérieure des images enregistrées, sauf si une autorisation de visualisation sans brouillage ni masque a été contrôlée positivement avant la visualisation.

6. Procédé selon l'une quelconque des revendications précédentes, suivant lequel plusieurs passages d'accès distincts sont respectivement équipés de caméras, et les étapes /1/ à /3/ sont exécutées séparément pour chacun desdits passages d'accès, et l'étape /4/ est exécutée pour un décompte unique de personnes, commun aux passages accès distincts.

7. Système vidéo de comptage de personnes, comprenant :
- une caméra (1) adaptée pour saisir un flux vidéo d'images (I1,..., I4), continûment entre un instant de début de comptage et un instant de fin de comptage ;
- une unité (2) de recherche de visage ou de silhouette humaine, adaptée pour rechercher au moins un visage ou une silhouette humaine à l'intérieur de chaque image (I1,..., I4) ;
- une unité (3) de détection d'apparition ou de disparition, adaptée pour détecter une évolution d'apparition ou de disparition pour chaque visage ou silhouette humaine qui a été trouvée par l'unité de recherche (2), à partir d'une comparaison entre des contenus respectifs de plusieurs images (I1,..., I4) successives ; et
- un compteur (4), commandé pour incrémenter ou décrémenter un décompte de personnes (10) en fonction d'un signal de détection d'apparition ou de disparition, produit par l'unité de détection (3).

8. Système vidéo de comptage de personnes selon la revendication 7, adapté pour mettre en oeuvre un procédé conforme à l'une quelconque des revendications 1 à 4.

9. Système vidéo de comptage de personnes selon la revendication 7 ou 8, comprenant en outre :
- un enregistreur vidéo (5), adapté pour enregistrer certaines au moins des images (I1,..., 14) saisies par la caméra (1) ;
- une unité (6) de brouillage ou masquage, adaptée pour lier un brouillage ou un masque à chaque emplacement dans les images (I1,..., I4) enregistrées, où se trouve un visage ou une silhouette humaine ;
- une unité (7) de contrôle d'autorisation, adaptée pour transmettre à un écran de visualisation (8) les images (I1,..., I4) traitées par l'unité de brouillage ou de masquage (6), de sorte que chaque visage ou silhouette humaine apparaisse brouillée ou masquée lors d'une visualisation desdites images sur l'écran de visualisation, sauf si une autorisation de visualisation sans brouillage ni masque a été contrôlée positivement par ladite unité de contrôle d'autorisation.

10. Système vidéo de comptage de personnes selon l'une quelconque des revendications 7 à 9, dans lequel l'un au moins parmi la caméra (1), l'unité (2) de recherche de visage ou de silhouette humaine, l'unité (3) de détection d'apparition ou de disparition, et le compteur (4) est partagé avec un système de surveillance vidéo de cabine adapté pour être installé à l'intérieur d'un avion (100).

11. Système vidéo de comptage de personnes selon l'une quelconque des revendications 7 à 10, comprenant une borne d'alimentation en énergie électrique, adaptée pour être raccordée à une source d'énergie externe audit système vidéo de comptage de personnes.

12. Système vidéo de comptage de personnes selon l'une quelconque des revendications 7 à 11, comprenant une sortie de transfert de données adaptée pour être raccordée à une unité de visualisation externe audit système vidéo de comptage de personnes.
